# EUROPEAN PATENT APPLICATION

(11) **EP 0 860 465 A1**
(43) Date of publication of application: **26.08.1998**
(21) Application number: 97200808.0
(22) Date of filing: 19.03.1997
(51) Int. Cl.: C08J 9/02, C08J 9/00, C08J 9/12, C08K 5/092

(54) **Foamed thermoplastic elastomeric article**

(30) Priority: 21.02.1997 US 38298 P
(71) Applicant: DSM N.V., 6411 TE Heerlen (NL)
(72) Inventor: Brzoskowski, Ryszard, Acton, Massachusetts 01718 (US); Wang, Yundong, Leominster, MA 01453 (US); La Tulippe, Christopher, Fitchburg, MA 01420 (US); Dion, Robert E., Hollis, NH 03049 (US); Hua, Cai, Acton, MA 01720 (US)

(57) **Abstract**

The invention relates to a process for preparing a foamed thermoplastic elastomeric article,comprising the following steps:
- heating a mixture comprising a thermoplastic elastomer selected from the group comprising styrene based thermoplastic elastomers and thermoplastic polyolefin elastomers, and an effective amount of a water containing chemical compound, to a temperature at which the water containing chemical compound releases water, which is above the melting point of the thermoplastic elastomer, and
- releasing the resulting heated mixture to atmospheric conditions.

The invention also relates to a foamable polymeric composition as well as to a foamed thermoplastic elastomeric article.

## Description

### FIELD OF THE INVENTION

The present invention relates to a process for preparing a foamed thermoplastic article from a thermoplastic elastomer.

### PRIOR ART

Such a process is known from EP-A-40,934, in which a blend of a polyolefin resin and a rubber is foamed by the use of either chemical or physical blowing agents.

A drawback of such a process is that the proposed blowing agents (e.g. chemical blowing agents, such as chlorofluorocarbons or low boiling hydrocarbons) have all their disadvantages, like inefficiency, and more in particular the detrimental influence on the ozon-layer of the earth-atmosphere.

It has been proposed to use gases, like N₂ or CO₂, as an alternative, but they are difficult to be mixed in thermoplastic elastomers.

In the prior art the use of liquid water as a blowing agent is known. WO-92/18326 as well as EP-A-503,220 describe a process for the preparation of foamed TPOE's, in which the TPOE is heated to a temperature above its melting point, after which water is added to the melted TPOE and the mixture is released to atmospheric pressure.

Such a process has a lot of drawbacks: the liquid water is injected and mixed with the TPOE; the process results in a non-uniformity of the resulting foam: large and irregular shape of the foam, as well as surface roughness. Such a process also requires special equipment for the mixing of the ingredients and the metering of the water.

### SUMMARY OF THE INVENTION

The process of the present invention provides a solution for the above problems. The invention concerns the preparation of a foamed thermoplastic article from a thermoplastic elastomer (TPE), in which the thermoplastic elastomer is selected from the group comprising styrene based thermoplastic elastomers (hereinafter also abbreviated as "STPE") and thermoplastic polyolefin elastomers (hereinafter also abbreviated as TPOE).

The present process comprises the following steps:
a) heating a mixture of the TPE and an effective amount of a water containing chemical compound (WCC), to at least a temperature at which the WCC releases water, which is above the melting point of the TPE, and
b) releasing the resulting heated mixture to atmospheric conditions.

Here and hereinafter the term "WCC" means any chemical compound or a mixture of chemical compounds that are capable of releasing water at elevated temperatures. In that sense different types of WCC are applicable according to the invention; examples thereof are:
1) metal salts of groups 1 or 2 of the Periodic Table (CRC Handbook of Chemistry & Physics, 1990), wherein the anion is a phosphate, chromate, sulfate, borate or the like, said salts containing hydrate water. Suitable salts include, for instance, magnesium sulfate dihydrate, magnesium sulfate heptahydrate, calcium sulfate dihydrate, potassium citrate monohydrate, tricalcium phosphate monohydrate, sodium perborate tetrahydrate, barium acetate monohydrate and barium borate heptahydrate, among others.
2) metal hydroxides which decompose at elevated temperature, releasing water. Suitable, water-releasing metal hydroxides include, among others, aluminium trihydrate (ATH), also known as aluminium trihydroxide (Al(OH)₃), and magnesium hydroxide (Mg(OH₂);
3) organic di-acids, which can be transformed to their anhydride equivalent. An example of this are succinic acids, having the formula 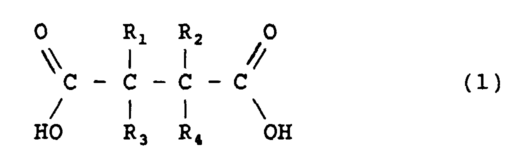 which can be converted to the anhydride 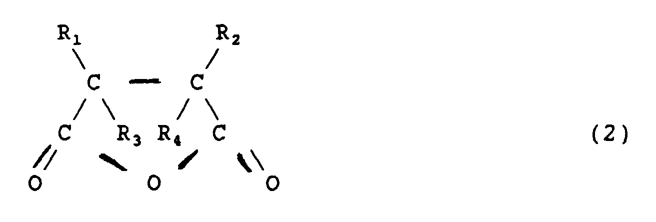 In these formulae (1) and (2) R₁-R₄ can, each independently, be hydrogen, an alkyl group having 1-20 C-atoms or a halogen group.
4) a mixture of ingredients that generate water through a polycondensation reaction. Suitable water-releasing polycondensable mixture include
   - a mixture of an organic α-ω diamide and an organic α-ω-diacid which react during the polycondensation to form a polyamide. For instance, the reaction of 1,4 diamino butane with adipic acid under the formation of Nylon 4,6; and the reaction of 1,6 diaminohexane with adipic acid under the formation of Nylon 6.6, will release water.
   - Another suitable form of polycondensation reaction is the formation of a polyester.
   The use of such a type of WCC not only results, during the foaming process of the TPE, in a release of water, but also in the formation of a nylon or an polyester phase in the TPE and therewith influencing the properties of the foamed article by their presence in the final article.

In the process of the present invention the WCC may only release its water (at least in substantial amounts) at a temperature at or above the melting point of the TPE. The water release temperature may on the other hand be not so high, that such temperature is detrimental for the thermoplastic elastomer to be foamed. The appropriate WCC can therefor be selected upon choosing the TPE to be foamed (and therefor knowing the range of the temperature in which the TPE can be processed (for instance the melting point and the decomposition temperature of that TPE)). Analytical instruments like DTA (differential thermal analysis), DSC (differential scanning calorimetry) or TGA (thermogravimetric analysis) can be used to determine the suitability of a potential WCC for the intended purpose.

### DETAILED DESCRIPTION OF THE INVENTION

The mixture of the TPE with the WCC, as used in the present invention, can be made according to several processes.
a) the TPE and the WCC can be dry blended, and added as a blend to the equipment in which the foaming takes place.
b) the WCC and the TPE can be mixed at a temperature above the melting point of the TPE, but below the temperature at which the WCC releases its water. Thereafter this melt mixture can either be processed to pellets (by for example extrusion and cooling), or directly processed into a foaming equipment. The melt-mixing of the WCC and TPE as well as the foaming of the TPE can take place in one apparatus, provided that the meltmixing and the foaming take place under different temperature conditions to avoid premature release of water before a thorough mixing and dispersion of the WCC in the TPE has taken place.

The thermoplastic elastomer (TPE), applicable in the process of the present invention, can be either a styrene based thermoplastic elastomer (STPE) or a thermoplastic polyolefin elastomer (TPOE), or mixtures thereof.

The STPE is a styrene blockcopolymer of the form A-B-A, in which A is a polystyrene chain and B a diene chain, such as polybutadiene or polyisopropene. The polystyrene may also be based on substituted styrenes, like α-methylstyrene. The styrene/diene molar ratio generally ranges from 50/50 to 15/85.

A preferred form of STPE is at least one of styrene-butadiene-styrene blockcopolymers and their partially or fully hydrogenated derivatives.

The TPOE are thermoplastic elastomers comprising a blend of a (semi-)crystalline polyolefin resin and a rubber dispersed in said resin. In general these blends comprise from 15-85 parts by weight of polyolefin resin and correspondingly from 85-15 parts by weight of rubber.

The polyolefin in such a TPOE can be any polyolefin orginating from a (co-)polymerisation of α-olefins, such as ethylene, propylene, butene-1 and others, as well the crystalline polycycloolefins. They have to behave like a thermoplastic and have a DSC crystallinity of at least 15%. A preference is present for homo- and copolymers of polyethylene and polypropylene; in the case of copolymers of said polyolefins the content of ethylene resp. propylene in said copolymer is at least 75 wt.%.

The rubber in the TPOE used according to the invention can be any rubber known in the art, provided that the rubber is stable under the foaming conditions. Rubbers useful are butylrubber (copolymer as well as terpolymers, and also in its halogenated form); ethylene/α-olefin copolymer rubber (EAM) as well as ethylene/α-olefin/diene terpolymer rubber (EADM); acrylonitrile/butadiene rubber (NBR); styrene/butadiene rubber (SBR); natural rubber (NR). In case of EAM or EADM rubber, the α-olefin in such a rubber is preferably propylene; in such a case the rubber is referred to as EP(D)M.

With more preference the TPOE is a thermoplastic polyolefin vulcanizate (TPOEV), in which the dispersed rubber is at least partially cured.

Here and hereinafter a TPOE is called a TPOEV when the rubber in the TPOE has a degree of vulcanization such that the amount of extractable rubber is less than 90%. The test to determine such an extractable amount is generally done with a solvent in which the polyolefin as well as the not-vulcanized rubber are soluble, but in which the vulcanized rubber is not soluble. A suitable solvent is boiling xylene.

By vulcanizing the rubber in a TPOE, the physical properties of the resulting TPOEV, as well as the physical properties of the resulting foamed article are improved.

The vulcanization of the rubber in a TPOE can be performed with any vulcanization system that is known in the art to vulcanize the rubber in the TPOEV. In the case of EA(D)M-rubber sulphur systems, peroxide systems and preferably vulcanization systems based on a phenolic resin are used.

To enjoy the best effects of the vulcanization, the TPOEV is preferably vulcanized to the extend that the amount of extractable rubber is less than 15%, more preferred even less than 5%.

The use of the WCC in the process for preparing a foamed thermoplastic article according to the invention enables the skilled man to perform a very controlled foaming process.

The amount of water released from the WCC is a function of temperature and residence time in the foaming process. For that reason the foam density can be easily controlled; the same composition can be used to make polymer foams of different densities. As care is taken in the process according to the invention to prepare a good dispersion of the WCC in the TPE, the WCC does not only act as a source of the blowing agent, but also acts as a nucleating agent which gives very fine and uniform cell structure.

To achieve the good dispersion of the WCC, the WCC, when in solid form added to the TPE, is in the form fine, small, dispersable particles. Generally the particle size is in the range of 0,01-100 µm and more preferably the WCC has a particle size below 50 µm. This results in a large number of well dispersed nucleating sites within the TPE.

The foaming process can be performed in any equipment that is known and suitable for foaming of a thermoplastic elastomer. By preference an extruder is used. When the same equipment is used for both the mixing process of the WCC and the TPE as well for the foaming process, care has to be taken that the TPE is first melted and thoroughly mixed with the WCC to obtain, preferably an at least substantial uniform distribution of the WCC in the TPE; the temperature is then raised to at least a temperature at which the WCC releases water, the resulting mix is extruded, e.g. through a die, and a foamed TPE is obtained.

In the mixing part of the process (i.e. the mixing of the TPE and the WCC), whether this is a separate process, or integrated with the foaming process, the temperature should be carefully controlled in order to prevent premature release and volatilization of the water. When the mixture is then heated to conditions where water is released from the WCC and whereafter the pressure is released, the TPE expands to a foamed article.

The mixing of the WCC with the TPE generally takes place at any temperature betweem 0°C and the temperature at which the WCC starts to release water. This water-release temperature, if not already known from literature, can easily be determined by analytical instruments as DTA, DSC and TGA. The temperature at which the mixing of the WCC with the TPE takes place depends on the type of mixture aimed at: a dry blend or a melt blend. In the last case the mixing temperature is above the melting point of the TPE but below the temperature at which the WCC releases water. In general is preferred that the mixing of the TPE with the WCC takes place at a temperature within the range of 10-250°C and that the water is released at a temperature within the range of 120-350°C (provided that the mixing temperature is below the water-release temperature).

The amount of WCC used in the process according to the invention depends on the density of the foam to be prepared, but of course also on the amount of water which can and is released per unit weight of WCC. The more water is released per unit weight of WCC, the less WCC is needed for a given foam density. On the other hand, there is no need for the WCC to release all its potential water.

In cases where the WCC is capable of exhibiting additional beneficial properties, e.g. also an activity as a flame retardant (like ATH, as an example), there is no requirement that all the WCC is decomposed during the foaming process. As a result a foamed article with improved flame retardancy is obtained. To obtain a flame-retardant foamed article it is also possible to use a combination of a WCC, which behaves like a flame retardant, and standard flame retardants, known in the art.

During the foaming process the amount of released water is sufficient to effect foaming, such as an amount in the range of 0,1-5 wt.%, relative to the TPE.

When a process according to the invention is used to prepare a foamed TPOEV, it is preferred that the vulcanization of the TPOEV is completed before the foaming process takes place. Otherwise it can be the case that the foaming process has too much influence on the vulcanization process to obtain acceptable foamed TPOEV articles.

The pressure at which the foaming process takes place is not different from the pressure-range at which conventional foaming of TPE takes place. In the present case care should be taken that in the foaming equipment, before the foam is really formed, the released water is in liquid form.

At the end of the foaming process according to the present invention, the mixture comprising the TPE and the released water is released to atmospheric conditions, preferably combined with a shaping operation (like the formation of a shaped foamed profile). Here and hereinafter the term "atmospheric conditions" means a pressure having a value of about 0.1 MPa, but the foaming process can also be concluded at a release pressure which is somewhat lower or higher than 0.1 MPa.

The thermoplastic elastomers used in the process according to the present invention can, also contain other ingredients for adjusting the physical properties of the foamed article. The rubber in the TPOE can contain extender oil, the TPE can contain additionally waxes, fillers, colorants, antidegradants, UV stabilizers and the like.

The invention also relates to a foamable polymeric composition, comprising a TPE, selected from STPE and TPOE, and an effective amount of a WCC. Here- and hereinafter the term "effective amount" is to be understood as the amount of WCC, which is capable of releasing the desired amount of water for the foaming process. This desired amount of water is, as indicated before, generally in the range of 0.1-5 wt.%, relative to the TPE.

The invention also relates to a foamed thermoplastic article, prepared by foaming a mixture comprising a TPE, selected from STPE and TPOE, and an effective amount of a WCC. Such a foamed article preferably has a density in the range of 50-900 kg/m³. The foam density can be controlled, e.g. target densities attained, by judicious selection of WCC, water-release temperature and the residence time in the foaming equipment.

The ingredients present in the foamable polymeric composition as well as in the foamed thermoplastic article according to the invention have been described above.

The invention will be elucidated by the following examples, which are intended to demonstrate, but not to restrict, the invention.

### Example I

This example shows the weight loss of ATH during a TGA heating scan.

**Table 1**

| Temperature, °C | Weight loss, wt.% at 10°C/min heating rate | Weight loss, wt.% at 5°C/min heating rate |
|---|---|---|
| 230 | 0.0 | 1.4 |
| 250 | 1.0 | 4.0 |
| 260 | 2.5 | 7.0 |
| 270 | 5.0 | 11.0 |
| 280 | 8.0 | 17.0 |
| 300 | 17.0 | 27.0 |
| 350 | 31.0 | 31.0 |
| 530 | 35.5 | 34.4 |

This example shows that the amount of water, released from a WCC can be easily controlled, by selecting the proper temperature and proper heating rate.

### Examples II-IV

A 34 mm intermeshing corotating screw extruder with a length to diameter ratio (L/D) of 35/1 was used to mix thermoplastic elastomer A (70 wt.%) with ATH powder (30 wt.%) at a melt temperature of 200 °C. The resulting mixture (compound B) was used in the following foaming examples. The thermoplastic elastomer A was a blend of polypropylene and phenolic cured particulate EPDM rubber (TPV) in a ratio of rubber to plastic of about 80 to 20. The EPDM rubber had an amount of extractable rubber (in boiling xylene) of 10%.

A three zone single screw extruder equipped with a general purpose screw was used in the foaming examples. The extruder had a diameter of 38.1 mm and a length to diameter ratio (L/D) of 24/1. A circular die with a diameter of 1.5 mm was used. Compound B was fed to the extruder at a rate of 2.2-2.3 kilograms per hour. The temperature at the second zone of the extruder was varied from 240 to 260°C in order to produce foams of different densities.

Density measurements were performed on the foamed samples. The cell size and uniformity were determined using optical techniques. As shown in Table 2, a series of foamed samples were obtained by changing the temperature setting at the second zone of the extruder. The higher the temperature at the second zone was set, the higher the rate of decomposition of ATH became, and thus the more water was released and the lower the density of the foam sample became. It was also found that the foaming process was very stable and easy to control even with an extruder of 24/1 L/D ratio. The foamed samples showed fine and uniform cell structures. The surface of the foamed strand was very smooth.

**Table 2**

| Example | II | III | IV |
|---|---|---|---|
| Screw RPM | 10.0 | 10.0 | 10.0 |
| Output rate, kg/hr | 2.3 | 2.3 | 2.2 |
| Temperature at the 2nd zone, °C | 240 | 250 | 260 |
| Temperature at the die, °C | 180 | 180 | 180 |
| Foam density, g/cm³ | 0.63 | 0.38 | 0.19 |
| Average cell size, µm | 60 | 70 | 80 |

### Examples V-VII

These Examples show the effect of screw speed on the foaming process.

In these examples, compound B was fed to the same extruder described in Example 2. This time, the screw speed was varied from 10.0 rpm to 17.1 rpm. The circular die used had a diameter of 2 mm. The conditions and the results are given in Table 3. It was found that the screw speed effected the foam density of the extruded profile. At the higher screw speed, the amount of water released was reduced since the residence time of the compound B in the extruder was shortened, and thus the density of the foam was increased. It is, therefore, indicated that the temperature profile and the screw speed can be adjusted in order to achieve a foamed profile with a controlled density. The adjustments should be made depending on the die geometry, the extruder and screw designs, and the pressure profile.

**Table 3**

| Run | V | VI | VII |
|---|---|---|---|
| Screw RPM | 10.0 | 13.7 | 17.1 |
| Output rate, kg/hr | 2.3 | 3.1 | 4.0 |
| Temperature at the 2nd zone, °C | 250 | 250 | 250 |
| Temperature at the die, °C | 180 | 180 | 180 |
| Foam density, g/cm³ | 0.51 | 0.56 | 0.61 |

### Examples VIII-X

Table 4 shows examples of foams produced using a circular die and rectangular dies.

In these examples, compound B was fed to the same extruder as described in Example 2. The circular die had a diameter of 2,4 mm. Two rectangular dies having geometry shown in Table 4 were used. In Example X a static mixer with a length of 597 mm was attached to the extruder. The use of such a static mixer increased the residence time of compound B and provided sufficient cooling of the melt.

| Example | VIII | IX | X |
|---|---|---|---|
| Screw RPM | 10.0 | 10 | 20.4 |
| Output rate, kg/hr | 2.3 | 2.3 | 3.1 |
| Die geometry | Circular die diameter 2.4 mm | Slit die 1.27 mm X 3.56 mm | Slit die 1.27 mm X 6.35 mm |
| Static mixer | not attached | not attached | attached |
| Temperature at the die, °C | 175 | 175 | 175 |
| Foam density, g/cm³ | 0.13 | 0.22 | 0.15 |

## Claims

1. Process for preparing a foamed thermoplastic article,comprising the following steps:
a) heating a mixture comprising a thermoplastic elastomer, selected from the group comprising styrene based thermoplastic elastomers and thermoplastic polyolefin elastomers, and an effective amount of a water containing chemical compound, to a temperature at which the water containing chemical compound releases water, which is above the melting point of the thermoplastic elastomer, and
b) releasing the resulting heated mixture to atmospheric conditions.

2. Process according to claim 1, characterized in that the thermoplastic polyolefin elastomer is a thermoplastic polyolefin vulcanizate, having a degree of vulcanization such that the amount of extractable rubber is less then 90 %.

3. Process according to anyone of claims 1-2, characterized in that the thermoplastic resin in the thermoplastic polyolefin elastomer or thermoplastic polyolefin vulcanizate is selected from the group comprising polyethylene and polypropylene homo- and copolymers.

4. Process according to claim 1, characterized in that the styrene based thermoplastic elastomer is selected from the group comprising styrene-butadiene-styrene blockcopolymers and their partial or fully hydrogenated derivatives.

5. Process according to anyone of claims 1-4, characterized in that the mixing of the thermoplastic elastomer with the water containing chemical compound takes place at a temperature within the range of 10-250°C and in that the water is released at a temperature within the range of 120-350°C.

6. Process according to anyone of claims 1-5, characterized in that the water containing chemical compound is at least one of aluminum trihydrate and magnesium hydroxide.

7. Process according to anyone of claims 1-6, characterized in that the amount of released water is in the range of 0.1 to 5 wt.%, relative to the thermoplastic elastomer.

8. Process according to claim 2, characterized in that the thermoplastic polyolefin elastomer is vulcanized to the extend, that the amount of extractable rubber is less than 15 %.

9. Process according to claim 1, characterized in that the rubber in the thermoplastic polyolefin elastomer is at least one of EP(D)M-rubber, NBR, SBR and butyl rubber.

10. Process according to anyone of claims 1-9, characterized in that the water containing chemical compound used is an organic diacid.

11. Process according to anyone of claims 1-9, characterized in that water is generated through a polycondensation of the water containing chemical compound.

12. Process according to anyone of claims 1-11, characterized in that the mixture of the thermoplastic elastomer with the water containing chemical compound is a dry blend.

13. Process according to anyone of claims 1-12, characterized in that the mixture comprising the thermoplastic elastomer and the water containing chemical compound is obtained by mixing the thermoplastic elastomer with the water containing chemical compound at a temperature above the melting point of the thermoplastic elastomer, and below the temperature at which the water containing chemical compound releases water.

14. Process according to anyone of claims 1-13, characterized in that the process is performed in an extruder.

15. A foamable polymeric composition, comprising a thermoplastic elastomer, selected from the group comprising styrene based thermoplastic elastomers and thermoplastic polyolefin elastomers, and an effective amount of a water containing chemical compound.

16. Foamed thermoplastic article ,prepared by foaming a mixture comprising a thermoplastic elastomer, selected from the group comprising styrene based thermoplastic elastomers and thermoplastic polyolefin elastomers, and an effective amount of a water containing chemical compound.

17. Foamed thermoplastic article, obtainable by a process according to anyone of claims 1-14.

18. Foamable polymeric composition or foamed thermoplastic article according to either claim 15,16 or 17, characterized in that the thermoplastic polyolefin elastomer is a thermoplastic polyolefin vulcanizate, having a degree of vulcanization such that the amount of extractable rubber is less then 90 %.

19. Foamable polymeric composition or foamed thermoplastic article according to either claim 15,16,17 or 18, characterized in that the thermoplastic resin in the thermoplastic polyolefin elastomer or thermoplastic polyolefin elastomer is selected from the group comprising polyethylene and polypropylene homo- and copolymers.

20. Foamable polymeric composition or foamed thermoplastic article according to either claim 15,16 or 17, characterized in that the styrene based thermoplastic elastomer is selected from the group comprising styrene-butadiene-styrene blockcopolymers and their partial or fully hydrogenated derivatives.

21. Foamable polymeric composition or foamed thermoplastic article according to either claim 15,16 or 17, characterized in that the water containing chemical compound is selected from the group comprising aluminum trihydrate and magnesium hydroxide.

22. Foamable polymeric composition or foamed thermoplastic article according to claim 18, characterized in that the thermoplastic polyolefin elastomer is vulcanized to the extent, that the amount of extractable rubber is less than 15 %.

23. Foamable polymeric composition or foamed thermoplastic article according to either claim 15,16 or 17, characterized in that the rubber in the thermoplastic polyolefin elastomer is selected from the group comprising EP(D)M-rubber, NBR, SBR and butyl rubber.

24. Foamable polymeric composition or foamed thermoplastic article according to either claim 15,16 or 17, characterized in that the water containing chemical compound used is an organic diacid.

25. Foamable polymeric composition or foamed thermoplastic article according to either claim 15,16 or 17, characterized in that water is generated through a polycondensation of the water containing chemical compound.

26. Foamed thermoplastic article according to anyone of claims 16-25, cit. the article has a density in the range of 50-900 kg/m³.
